# EUROPÄISCHE PATENTSCHRIFT

(11) **EP 1 053 920 B1**
(45) Veröffentlichungstag und Bekanntmachung des Hinweises auf die Patenterteilung: **06.10.2004**
(21) Anmeldenummer: 00107806.2
(22) Anmeldetag: 12.04.2000
(51) Int. Cl.: B60S 1/02, H05B 3/84

(54) **Scheibenheizung für Kraftfahrzeuge**
Window heater for vehicles
Chauffage pour vitres de véhicules

(30) Priorität: 21.05.1999 DE 19923496
(43) Veröffentlichungstag der Anmeldung: 22.11.2000
(73) Patentinhaber: Volkswagen Aktiengesellschaft, 38436 Wolfsburg (DE)
(72) Erfinder: Schultz, Jürgen, 38554 Weyhausen (DE)

(56) Entgegenhaltungen:
- DE-A- 4 431 028
- DE-C- 19 705 416
- GB-A- 2 198 261
- PATENT ABSTRACTS OF JAPAN vol. 1995, no. 09, 31. Oktober 1995 (1995-10-31) -& JP 07 165020 A (WATANABE:KK), 27. Juni 1995 (1995-06-27)

## Beschreibung

Die Erfindung betrifft eine Scheibenheizung für Kraftfahrzeuge gemäß Oberbegriff des Anspruchs 1. Eine solche Scheibenheizung ist aus der DE 197 05 416 C1 bekannt.

Zum Abtauen von vereisten Heckscheiben und Windschutzscheiben sind elektrisch beheizbare Scheiben allgemein bekannt, deren Scheibenheizung mit wenigstens einem elektrischen Heizelement ausgerüstet ist. Eine derartige beheizbare Windschutzscheibe ist in der DE 296 06 071 U1 beschrieben. Als Heizelement wird für die Scheibenheizung eine Anordnung von Heizdrähten verwendet, die sich im unteren Bereich der Windschutzscheibe befindet.

In der DE 197 05 416 C1 ist ein Verfahren zur Steuerung der Heizung einer Heckscheibe eines Kraftfahrzeuges beschrieben. Die Heizung der Heckscheibe wird dabei nach einer bestimmten Einschaltdauer abgeschaltet, wobei die Einschaltdauer der Heizung mit zunehmender Fahrgeschwindigkeit des Kraftfahrzeuges verlängert wird. Außerdem besteht die Möglichkeit die Heizung der Heckscheibe in Abhängigkeit von der Umgebungstemperatur zu steuern. Die Einschaltdauer der Scheibenheizung kann so begrenzt werden, daß die Enteisung und eine klare Sicht gewährleistet ist.

Schließlich ist aus der US-PS 4 904 844 eine fernsteuerbare Scheibenheizung bekannt, die beispielsweise vor Fahrtantritt bereits vom Wohnhaus aus aktiviert werden kann. Dadurch soll erreicht werden, daß die vereisten Scheiben an einem im Bereich des Wohnhauses abgestellten Kraftfahrzeug mittels der Scheibenheizung unmittelbar vor Fahrtantritt enteist werden.

Gerade bei sehr kalter Witterung ist der Betrieb der Scheibenheizung zur Enteisung von vereisten Scheiben problematisch, da dies eine zu hohe Belastung der Starterbatterie zur Folge haben kann.

Der Erfindung liegt die Aufgabe zugrunde, eine Scheibenheizung für Kraftfahrzeuge mit wenigstens einem elektrischen Heizelement zu schaffen, die das Enteisen von Scheiben mittels eines Eisschabers erleichtert und eine möglichst geringe Belastung der Starterbatterie erfordert.

Die Lösung dieser Aufgabe erhält man durch die im Anspruch 1 angegebenen Merkmale. Um das Abschaben der auf einer Scheibe anhaftenden Eisschicht zu erleichtern, besitzt die Heizungssteuerung der Scheibenheizung eine Antaufunktion mit einer kürzeren Einschaltdauer als die zum vollständigen Abtauen erforderliche Einschaltdauer. Die Antaufunktion bewirkt, daß sich die Eisverbindung zwischen der auf der Scheibe befindlichen Eisschicht und der Scheibe löst, so daß mit einem Schaber von Hand das Eis sehr einfach abgeschabt werden kann. Die wesentlich geringere Einschaltdauer der Scheibenheizung, die zum Antauen erforderlich ist, belastet die Starterbatterie des Kraftfahrzeugs wesentlich weniger, als wenn mit der Scheibenheizung ein vollständiges Abtauen vor dem Starten des Motors vorgenommen werden würde. Durch den wesentlich geringeren Energiebedarf ist es möglich, daß auch bei tiefen Außentemperaturen und bei entsprechend schlechten Randbedingungen dennoch das Antauen der vereisten Scheiben erfolgen kann.

Die Antaufunktion ist vorzugsweise derart ausgebildet, daß die Einschaltdauer des Heizelements gerade so bemessen ist, daß eine auf der beheizbaren Scheibe anhaftende Eisschicht nur direkt an der Scheibenoberfläche angetaut wird. Dabei kann die Antaufunktion temperaturabhängig gesteuert sein, d. h. unter Berücksichtigung der Umgebungstemperatur und/oder unter Berücksichtigung der Scheibentemperatur. Wird mittels eines Temperaturfühlers die Scheibentemperatur gemessen, läßt sich eine besonders exakte Bestimmung der Einschaltdauer vornehmen, um das Heizelement nicht unnötig lange mit elektrischer Energie zu versorgen. Wird die Einschaltdauer von der Umgebungstemperatur beeinflußt, so kann dies in der Weise erfolgen, daß zu jeder Umgebungstemperatur eine empirisch ermittelte und beispielsweise in einem Speicher abgelegte Einschaltdauer ausgewählt wird.

Besonders vorteilhaft ist es, den Batteriezustand der Starterbatterie während des Antauvorganges zu überwachen und bei Unterschreitung eines Zustandsgrenzwertes die Energiezufuhr zum Heizelement abzuschalten. Auf diese Weise wird sichergestellt, daß die Starterbatterie nicht zu stark beansprucht und der Fahrzeugmotor sicher gestartet werden kann.

Eine zusätzliche Sicherheitsfunktion kann derart ausgestaltet sein, daß nach einer vorgegebenen maximalen Einschaltdauer die Energiezufuhr zum Heizelement in jedem Falle abgeschaltet wird.

Die Antaufunktion der Scheibenheizung ist vorzugsweise mit dem Fernsteuersender der Schließanlage aktivierbar. Zu diesem Zweck kann der Fernsteuersender ein speziell codiertes Sendesignal abgeben, welches in einer Empfangseinheit des Kraftfahrzeugs als Aktivierungssignal erkannt wird. Durch ein entsprechendes Blinksignal am Fahrzeug kann dem Benutzer signalisiert werden, daß die Scheibenheizung aktiviert ist.

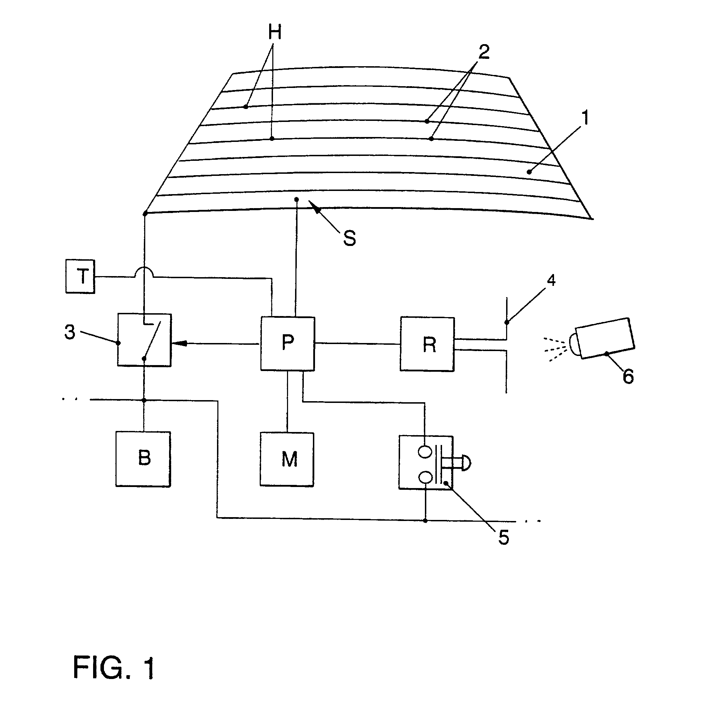

Die Erfindung wird nachfolgend anhand eines als Blockschaltbild in der Zeichnung dargestellten Ausführungsbeispiels näher erläutert.

Die Scheibenheizung umfaßt als beheizbare Scheibe eine Heckscheibe 1 mit mehreren Widerstandsdrähten 2, die das Heizelement H der Heckscheibe 1 darstellen.

Über einen steuerbaren Schalter 3 kann das Heizelement H an die Starterbatterie B angelegt und mit elektrischer Energie versorgt werden. Die Steuerung des Schalters 3 erfolgt dabei über eine Heizungssteuerung P, die mit einem Speicher M und mit einem Außentemperaturfühler T in Verbindung steht. Außerdem ist an die Heizungssteuerung P ein Sensor S angeschlossen, der den Antauvorgang an der Heckscheibe 1 überwacht. An einem weiteren Eingang der Heizungssteuerung P ist ein Empfänger R angeschlossen, der über ein Empfangselement 4 ein Fernsteuersignal zu Aktivierung der Scheibenheizung empfangen kann. Alternativ kann die Scheibenheizung auch mittels eines Tasters 5 von Hand aktiviert werden.

Zur Aktivierung der Scheibenheizung kann in größerer Entfernung vom Kraftfahrzeug, beispielsweise vom Wohnhaus des Fahrzeughalters aus, mittels des Fernsteuersenders 6 ein elektromagnetisches oder ggf. auch ein Infrarotsignal abgegeben werden, welches von dem Empfangselement 4 erkannt wird. Über die Heizungssteuerung P wird der Schalter 3 geschlossen und das Heizelement H mit elektrischer Energie versorgt. Die Einschaltdauer kann dabei anhand der Umgebungstemperatur, die von dem Temperaturfühler T erfaßt wird, gesteuert werden. Zu diesem Zweck kann die Heizungssteuerung P zu jeder aktuellen Umgebungstemperatur eine zuvor empirisch ermittelte Einschaltdauer aus dem Speicher M abrufen.

Alternativ oder auch in Kombination mit dem Sensor S kann die Einschaltdauer, die zum Antauen einer auf der Heckscheibe 1 befindlichen Eisschicht erforderlich ist, noch exakter bestimmt werden. Der Sensor S kann ein Temperaturfühler oder ein Sensorelement sein, welches das Antauen der Eisschicht feststellt.

### BEZUGSZEICHENLISTE

- 1: Heckscheibe
- 2: Widerstandsdrähte
- 3: Schalter
- 4: Empfangselement
- 5: Taster
- 6: Fernsteuersender
- H: Heizelement
- B: Starterbatterie
- P: Heizungssteuerung
- M: Speicher
- S: Sensor
- R: Empfänger
- T: Temperaturfühler

## Patentansprüche

1. Scheibenheizung für Kraftfahrzeuge mit einer Heizungssteuerung (P) und mit wenigstens einem in einer beheizbaren Scheibe angeordneten elektrischen Heizelement (H), dessen Einschaltdauer über die Heizungssteuerung (P) gesteuert wird,
**dadurch gekennzeichnet, daß**
die Heizungsteuerung (P) eine Antaufunktion mit einer gegenüber der Einschaltdauer zum Abtauen einer Scheibe kürzeren Einschaltdauer hat.

2. Scheibenheizung nach Anspruch 1,
**dadurch gekennzeichnet, daß**
bei der Antaufunktion die Einschaltdauer des Heizungselements (H) so begrenzt wird, daß eine auf der beheizbaren Scheibe anhaftende Eisschicht nur direkt an der Scheibenoberfläche angetaut wird.

3. Scheibenheizung nach einem der Ansprüche 1 oder 2,
**dadurch gekennzeichnet, daß**
bei der Antaufunktion die Einschaltdauer des Heizungselements (H) in Abhängigkeit von der Umgebungstemperatur gesteuert wird.

4. Scheibenheizung nach einem der vorhergehenden Ansprüche,
**dadurch gekennzeichnet, daß**
die Scheibentemperatur der beheizbaren Scheibe gemessen und bei Erreichen einer vorgegebenen Scheibentemperatur der Antauvorgang abgeschaltet wird.

5. Scheibenheizung nach einem der vorhergehenden Ansprüche,
**dadurch gekennzeichnet, daß**
der Batteriezustand der Starterbatterie (B) überwacht und bei Unterschreitung eines Zustandsgrenzwertes die Energiezufuhr zum Heizelement (H) abgeschaltet wird.

6. Scheibenheizung nach einem der vorhergehenden Ansprüche,
**dadurch gekennzeichnet, daß**
nach einer vorgegebenen maximalen Einschaltdauer die Energiezufuhr zum Heizelement (H) abgeschaltet wird.

7. Scheibenheizung nach einem der vorhergehenden Ansprüche,
**dadurch gekennzeichnet, daß**
die Antaufunktion über einen Fernsteuersender (6) aktivierbar ist.

8. Scheibenheizung nach Anspruch 7,
**dadurch gekennzeichnet, daß**
die Antaufunktion mit dem Fernsteuersender (6) der Schließanlage aktivierbar ist, wobei der Fernsteuersender (6) ein speziell zur Aktivierung bestimmtes Signal an einen im Kraftfahrzeug vorhandenen Empfänger (R) sendet.

9. Scheibenheizung nach einem der Ansprüche 7 oder 8,
**dadurch gekennzeichnet, daß**
ein spezifisches Blinksignal am Kraftfahrzeug die Aktivierung der Antaufunktion anzeigt.

## Claims

1. Window heater for motor vehicles having a heating controller (P) and having at least one electrical heating element (H) arranged in a heatable window, the On time of said heating element (H) being controlled by the heating controller (P), **characterized in that** the heating controller (P) has a part-defrost function having an On time which is shorter than the On time for completely defrosting a window.

2. Window heater according to Claim 1, **characterized in that**, with the part-defrost function, the On time of the heating element (H) is limited such that a layer of ice adhering to the heatable window is part-defrosted only directly on the window surface.

3. Window heater according to either of Claims 1 or 2, **characterized in that**, with the part-defrost function, the On time of the heating element (H) is controlled as a function of the ambient temperature.

4. Window heater according to one of the preceding claims, **characterized in that** the window temperature of the heatable window is measured, and, when a prescribed window temperature is reached, the part-defrost procedure is switched off.

5. Window heater according to one of the preceding claims, **characterized in that** the battery charge state of the starter battery (B) is monitored, and, when a charge state limit value is undershot, the supply of power to the heating element (H) is switched off.

6. Window heater according to one of the preceding claims, **characterized in that**, following a predetermined maximum On time, the supply of power to the heating element (H) is switched off.

7. Window heater according to one of the preceding claims, **characterized in that** the part-defrost function can be activated by means of a remote control transmitter (6).

8. Window heater according to Claim 7, **characterized in that** the part-defrost function can be activated using the remote control transmitter (6) of the locking system, the remote control transmitter (6) transmitting a signal which is specifically for activation purposes to a receiver (R) provided in the motor vehicle.

9. Window heater according to either of Claims 7 or 8, **characterized in that** a specific flashing signal on the motor vehicle indicates activation of the part-defrost function.

## Revendications

1. Chauffage pour vitre de véhicules automobiles, avec une commande de chauffage (P) et avec au moins un élément chauffant (H) électrique disposé dans une vitre chauffante, dont la durée de connexion est pilotée par la commande de chauffage (P), **caractérisé en ce que** la commande de chauffage (P) détient une fonction de dégivrage avec une durée de connexion plus courte par rapport à la durée de connexion pour le dégivrage d'une vitre.

2. Chauffage pour vitre selon la revendication 1, **caractérisé en ce qu'**en fonction de dégivrage, la durée de connexion de l'élément chauffant (H) est limitée de façon telle qu'une couche de glace qui adhère sur la vitre chauffante n'est dégivrée que directement sur la surface de la vitre.

3. Chauffage pour vitre selon l'une quelconque des revendications 1 ou 2, **caractérisé en ce qu'**en fonction de dégivrage, la durée de connexion de l'élément chauffant (H) est pilotée en fonction de la température environnante.

4. Chauffage pour vitre selon l'une quelconque des revendications précédentes, **caractérisé en ce que** la température sur la vitre chauffante est mesurée et à l'atteinte d'une température prédéfinie sur la vitre, le processus de dégivrage est déconnecté.

5. Chauffage pour vitre selon l'une quelconque des revendications précédentes, **caractérisé en ce que** l'état de la batterie de démarrage (B) est surveillé et lorsqu'une valeur limite d'état n'est pas atteinte, l'alimentation en énergie vers l'élément chauffant (H) est déconnectée.

6. Chauffage pour vitre selon l'une quelconque des revendications précédentes, **caractérisé en ce qu'**après une durée de connexion maximale prédéfinie, l'alimentation en énergie vers l'élément chauffant (H) est déconnectée.

7. Chauffage pour vitre selon l'une quelconque des revendications précédentes, **caractérisé en ce que** la fonction de dégivrage est activable par l'intermédiaire d'une télécommande (6).

8. Chauffage pour vitre selon la revendication 7, **caractérisé en ce que** la fonction de dégivrage est activable par l'intermédiaire de la télécommande (6) du verrouillage centralisé, la télécommande (6) émettant un signal défini spécial pour l'activation vers un récepteur présent dans le véhicule automobile.

9. Chauffage pour vitre selon l'une quelconque des revendications 7 ou 8, **caractérisé en ce qu'**un signal clignotant spécifique sur le véhicule automobile indique l'activation de la fonction de dégivrage.
